# EUROPEAN PATENT SPECIFICATION

(11) **EP 3 104 279 B1**
(45) Date of publication and mention of the grant of the patent: **22.11.2017**
(21) Application number: 16173414.0
(22) Date of filing: 07.06.2016
(51) Int. Cl.: G06F 11/36

(54) **TESTING INTERACTIVE NETWORK SYSTEMS**
PRÜFUNG INTERAKTIVER NETZWERKSYSTEME
SYSTÈMES DE RÉSEAU INTERACTIFS DE TEST

(30) Priority: 12.06.2015 GB 201510295
(43) Date of publication of application: 14.12.2016
(73) Proprietor: Micro Focus IP Development Ltd, Newbury, Berkshire RG14 1QN (GB)
(72) Inventor: Donner, Peter, 4523 Neuzeug (AT); Haberfehlner, Gerald, 4040 Linz (AT)
(74) Representative: EIP

(56) References cited:
- US-A1- 2008 109 680
- US-A1- 2010 325 615
- US-A1- 2015 309 916
- US-B1- 8 966 446

## Description

### Technical Field

The present invention relates to testing webpage functionality on multiple devices, in particular to testing interactions with webpages that are displayable on mobile communications devices.

### Background

The current nature of personal computing presents developers of interactive network systems with a difficult task to ensure satisfactory technical functionality. For example, modern computer server systems are typically arranged to receive requests from computer program code operating on a client computing device, to handle these requests and to supply a suitable response. Many network systems operate by providing document data to the client computing device. The requests and responses are often sent and received using a suite of communication protocols such as the Transmission Control Protocol (TCP), the Internet Protocol (IP), and the Hyper Text Transfer Protocol (HTTP). This document data is often in the form of so-called webpages, e.g. HyperText Markup Language (HTML) documents. These webpages are often generated dynamically by one or more computer server systems. The set of interconnected computer networks over which document data is sent and received is often referred to as the Internet and the document data that is accessible at any one time is often referred to as the World Wide Web.

The developers of interactive network systems that operate over the Internet face multiple complexities. For example, these systems may receive requests from, and be required to respond to, a wide variety of hardware systems that implement client devices. These range from traditional desktop computing devices, through to laptop computer devices, and onto more recent tablet and mobile devices. Moreover, as well as the different variety of hardware systems there is also a large variety of operating software. For example, certain client devices may comprise multiple client platforms for viewing and interacting with web content, such as different operating systems, web browsers and applications. Tablets and, in particular, smartphones, typically have different hardware and operating systems from comparative desktop or laptop systems. For example, they may have different screen resolutions and sizes as well as different input/output systems (e.g. a touchscreen input as compared to a mouse input). Due to the diversity of devices and environments that these interactive network systems need to be functionally suitable for, accurate testing of these systems is difficult. In certain cases, responsivity to interactions need to be consistent; for example, an interactive network system may be required to provide a common sequence of interactions across many heterogeneous platforms. Sequences of interactions need to be tested such that they lead to the same outcomes despite underlying differences in client devices.

In addition to the wide variety of client device configurations for interacting with document data available via the Internet, there is also a trend of increasing complexity in the interactive network systems themselves. Advancing from traditional text-based content with minimal formatting (e.g. static HTML documents), a large proportion of webpages are now dynamic, i.e. the document data for the webpage is generated by the interactive network system based on a state of a large collection of measurements and/or parameter values at the time of the client device request. For example, many web servers programmatically construct an HTML document that is unique to a particular request, rather than retrieving a static HTML file from a document repository. Many webpages moreover form part of data input systems, e.g. involving form fields and interactive user interface controls. This has increased with the capabilities of recent HTML standards, such as HTML5. Indeed, certain client devices are available that comprise a thin client operating system that only provide a web browser; these client systems thus rely on web applications to provide general-purpose computing functionality (see e.g. Chrome OS™ supplied by Google Inc. or Firefox OS™ supplied by the Mozilla Foundation).

Lastly, many interactive network systems are now arranged on a distributed basis. Rather than a classic client-server architecture, an interactive network system often comprises several distinct computer server systems that exchange information with a client device in order to provide a webpage. For example, the common protocols of the Internet enable rich functionality to be provided by different computer server systems, e.g. authentication, multimedia content and/or data may be provided using a request to an application programming interface (API) accessible over one or more networks. A web application may thus comprise a plurality of webpages that are all dynamically generated, e.g. a simple interaction may involve asynchronous interactions with one or more computer server systems and hundreds or thousands of lines of exchanged data. These distributed systems often make use of embedded document portions, or 'inline frames', in order to provide a webpage, wherein different computer server systems provide different document portions. Embedded document portions pose a technical challenge to those trying to test interactive network systems. For example, security mechanisms active upon a client device often restrict access to these document portions. Document US20100325615 discloses capturing web-page information through a web-browser plug-in includes accessing a target test website, receiving webpage data from the target test website, injecting test code into the webpage data to create a modified webpage, executing the injected test code from the modified webpage, and outputting results of the executing.

### Summary

Aspects of the present invention are set out in the appended claims.

Further features and advantages of the invention will become apparent from the following description of preferred embodiments of the invention, given by way of example only, which is made with reference to the accompanying drawings.

### Brief Description of the Drawings

Figure 1 is a schematic diagram showing the components of a computer system for testing interactions with webpages according to an example;
Figure 2a is a schematic diagram showing a simplified representation of the structure of a webpage with a nested inline frame according to an example;
Figure 2b is a schematic diagram showing a simplified representation of the structure of a webpage with multiple and sequentially nested inline frames according to an example;
Figure 3 is a schematic diagram showing examples of document data corresponding to a webpage and nested inline frame webpages;
Figure 4a is a schematic diagram showing a representation of the document object model of a webpage according to an example;
Figure 4b is a schematic diagram showing a representation of the document object model of an entire webpage and its contents according to an example;
Figure 5a is a schematic diagram showing recursive retrieval of webpage content from nested inline frames according to an example;
Figure 5b is a schematic diagram showing routing of a command to a targeted inline frame according to an example;
Figure 6a is a flow diagram showing a method for testing interactions with a webpage comprising inline frames according to an example;
Figure 6b is a flow diagram showing further method steps for testing interactions with a webpage comprising inline frames according to an example; and
Figure 7 is a diagram showing an example of a test script according to a particular example.

### Detailed Description

Certain examples described herein provide technical improvements in the field of computer system testing, in particular the testing of interactive network systems. This testing may comprise determining whether the interactive network system is operating correctly, e.g. providing similar functionality across a defined range of client device configurations. In certain described examples, this testing comprises testing a plurality of defined interactions with a webpage that is accessible by a mobile communications device, e.g. where the webpage is displayed in a mobile web browser and/or a web-capable mobile application. In one described case, the webpage to be tested comprises inline frames. In this case, examples involve the injection of computer code into document data corresponding to the webpage. The injected code allows the retrieval of all content associated with the webpage. Where part of the content is associated with an inline frame, said part of the content may be hosted in a different web domain to that of the webpage. Thus, the injected code in this described case enables communication between inline frames and across web domain boundaries in order to retrieve all content associated with the webpage, so that it may be stored in a data structure as a representation of the webpage. With this stored data structure, automated testing of interactions with the components comprised within the webpage may be achieved. The injected code may be used to route commands or instructions associated with the interactions to computer program code associated with an appropriate inline frame, wherein the inline frame is in turn associated with a web domain hosted by a web server. Versions of the representation following each response to an interaction may also be stored so that they can be processed to determine whether functionality on the mobile communications device is correct.

Certain examples described herein thus provide a technical system that enables computer engineers to test whether a particular interactive network system operates correctly. "Correct" operation may be defined with reference to a plurality of defined interactions with the webpage and one or more expected responses resulting from the defined interactions. For example, an online image processing application may be accessed as a webpage from a desktop computing device and a mobile communications device. The online image processing application may offer user interface components to enable an image to be uploaded, resized and then sent to a third-party server for publication. A computer engineer needs to confirm that, for this sequence of operations, the collection of server computer devices and computer program code that provide the functionality of the online image processing application allow the sequence to be performed on both the desktop computing device and the mobile communications device. For example, due to screen size differences, and/or the manner touchscreen interactions are implemented on the mobile communications device, a webpage component, e.g. a user interface control to enact the resizing operation as defined as data between a given set of HTML tags, may not be accessible to a user of the mobile communications device. Similarly a particular user interface control required for interaction may not be renderable on the mobile communications device. There may be many different reasons for these differences in operation. For example, amongst others: a mobile communications device may not comprise suitable graphics hardware; the operating system of the mobile communications device may restrict certain HTML or third-party plug-in components for security reasons; and a desktop computer system may have access to operating system services that are not available on the mobile communications device (e.g. access to a file system or library functions that activate installation). Other example interactions may include, amongst others: authentication, e.g. a sequence to authenticate a user using one or more trusted systems; interactions with transport systems, e.g. to retrieve live travel information and/or to obtain digital tickets for carriage; interactions with web-development systems, e.g. so-called control-panel management, error reporting and server management; interactions with e-commerce systems, e.g. to purchase goods and services including interactions with third-party payment systems; and interactions with communication systems such as publication systems and/or messaging systems.

Certain examples described herein provide a system that may be communicatively-coupled to a mobile communications device to determine correct functioning. In certain cases, the system is configured to compare one or more responses resulting from a plurality of test interactions involving the mobile communications device (e.g. based on responses received via a communication protocol) with data indicative of the plurality of defined interactions with the webpage and one or more expected responses resulting from the defined interactions (e.g. as defined in a test script or file). This may result in the system outputting an indication that the plurality of test interactions have been successfully completed, e .g. that there are no errors, and/or may result in the system outputting data indicative of errors, e.g. outputting where a response differed from a defined expected response. In one case, an error may be indicated by comparing response data with expected response data, e.g. determining whether a request to verify the existence of a particular element in the document data receives an expected positive response. Other properties or attributes of the document data, including the structure of the document data itself, may also be analysed by comparing response data with expected response data.

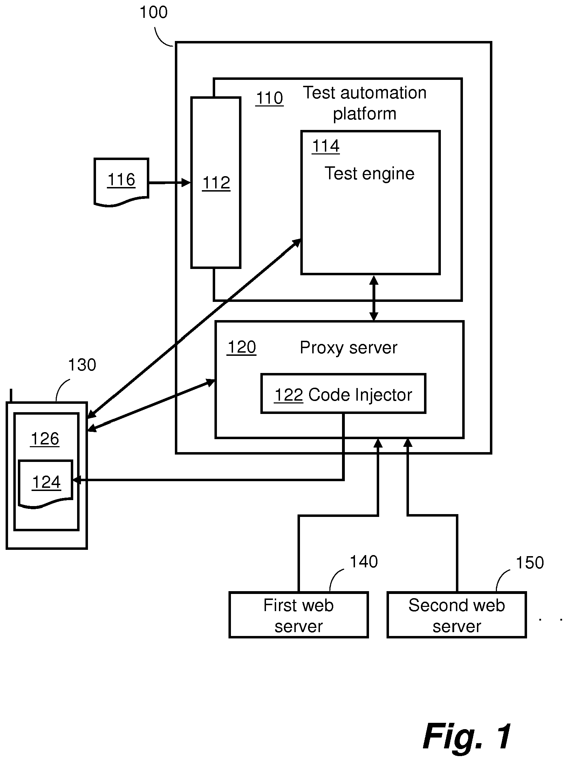

Certain examples described herein are implemented by computer systems communicatively coupled to, for example, a mobile communications device; each comprising at least one processor and a memory, such as random access memory. An example of a computer system setup is described below with reference to Figure 1.

### Computer System Setup

Figure 1 shows a computer system 100 comprising a test automation platform 110 and a proxy server 120. The test automation platform 110 comprises an interface 112 and a test engine 114. The interface 112 is arranged to load a test script 116 comprising a plurality of defined interactions with the webpage and one or more expected responses resulting from the defined interactions. The proxy server 120 comprises a code injector 122. The code injector 122 is configured to inject computer program code 124 into a representation of the webpage 126 that is requested by a mobile communications device 130. The computer system 100 is communicatively coupled to the mobile telecommunications device 130 and a plurality of servers comprising a first web server 140 and a second web server 150.

The test automation platform 110 may comprise a physical hardware module within the computer system, or may comprise computer program code that is run on the computer system, e.g. in the latter case a combination of computing hardware and computer program code. The computer system 100 may comprise an implementation that uses Silk Test® as provided by Micro Focus International Plc of Newbury, UK.

The interface 112 may comprise a physical interface such as a port for removable memory storage, a file system interface e.g. to retrieve a file stored in a storage device coupled to the computer system 100, and/or a virtual interface e.g. if the computer system 100 comprises a virtual device.

The test engine 114 may comprise a hardware module connected to, or a computer program code module communicatively coupled to, the test automation platform. Figure 1 shows the test engine 114 communicatively coupled to both the proxy server 120 and the mobile communications device 130. In some examples, the test engine is communicatively coupled to only the proxy server 120, wherein the proxy server 120 is used as an intermediary for data exchange between the test engine 114 and the mobile communications device 130. It should be understood that in this example, certain elements may be omitted for clarity of explanation, e.g. the mobile communications device 130 in certain cases may be communicatively coupled to one or more components of the computer system 100 via one or more intermediate devices that are not shown.

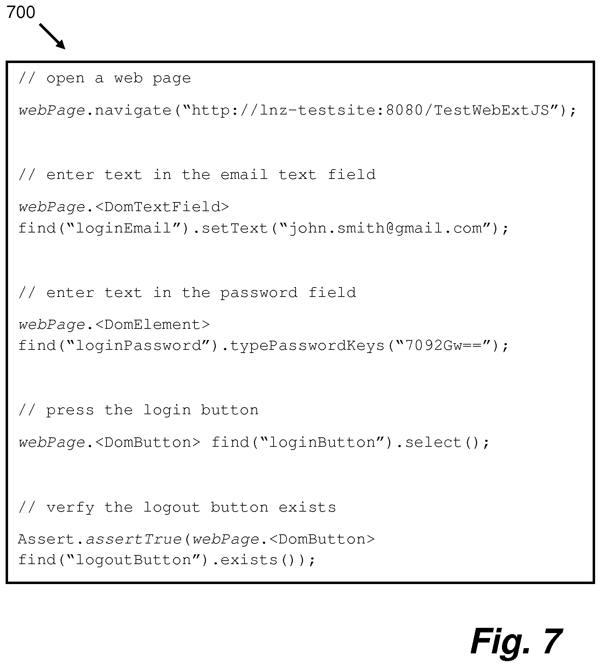

In the example of Figure 1, the interface 112 of the test automation platform 110 receives and loads a test script 116. The test script 116 is then implemented by the test engine 114. In implementing the test script 116, the test engine 114 is configured to compare one or more responses resulting from a plurality of test interactions involving a test device, in this example the mobile communications device 130, to the one or more expected responses in the test script 116 to indicate whether the plurality of defined interactions resulted in the one or more expected responses on the test device. One example of a test script is described later with reference to Figure 7.

The proxy server 120 of Figure 1 is a server that functions as an intermediary between a client, in this example the mobile communications device 130, and other servers, in this example the plurality of servers including the first and second web servers, 140 and 150, respectively. Servers, including proxy servers and web servers, may comprise computer program code that is implemented by one or more physical and/or virtual computing systems and is arranged to accept requests from the client, e.g. using a stack of communication protocols, and to provide suitable responses to these requests. In one case, web servers 140 and 150 may comprise dedicated computing devices arranged to serve webpages, e.g. interact with devices using HTTP or similar. The proxy server 120 may reside at various points between the mobile communications device 130 and destination servers, e.g. first and second web servers 140 and 150, including on the client mobile communications device 130 itself. In this example, the proxy server 120 is also run on a dedicated system and is positioned intermediately between the mobile communications device 130 and the plurality of servers including the first and second webservers, 140 and 150. The proxy server 120 is arranged to intercept communications between the mobile communications device 130 and the plurality of servers during the testing. In this example, the proxy server 120 behaves as a web proxy, intercepting requests made by the mobile communications device 130 for webpage data stored on the web servers 140 and 150. In certain cases the proxy server 120 is arranged to act as a file proxy, handling requests from the mobile communications device 130 for files and responding with the delivery of the requested files.

In Figure 1, the mobile communications device 130 is configured to request data so as to construct the representation of a webpage 126 within data storage of said device 130. This may be performed under control of the test engine 114. For example, the mobile communications device 130 is configured to request the webpage via an HTTP request. In this case communications from the mobile communications device 130, e.g. the HTTP request, are intercepted by the proxy server 120, wherein the proxy server 120 is configured to forward the request onto one or more of the first web server 140 and the second web server 150. The proxy server 120 is then arranged to receive responses to one or more requests sent to the web servers 140, 150 and to modify the data of those responses before sending a representation of the webpage 126 to the mobile communications device 130.

The representation of the webpage 126, sent from the proxy server 120 to the mobile communications device 130 in the example of Figure 1, comprises document data corresponding to the webpage that is received from the first web server 140, and document data corresponding to an inline frame present in the webpage that is received from the second web server 150, the first web server being associated with a first domain and the second web server being associated with a second domain. In some examples, the representation of the webpage 126 comprises a data structure representing a document object model and the document data corresponding to the webpage and the inline frame is stored in the data structure. This data structure may comprise string data and in some examples may be an array storing such string data.

The code injector 122 is shown in Figure 1 as a component comprised within the proxy server 120. The code injector 122 may be a hardware module connected within the proxy server 120 or, in certain examples, may be a computer program code module that is instanced by the proxy server 120. In certain examples, the code injector 122 parses the document data representative of webpage 126 to select a position for injected computer program code 124 to be placed. Figure 1 schematically shows the code injector 122 injecting computer program code 124 into the representation 126. The code injector 122 is configured to inject computer program code into the response data from the web servers 140, 150 and then forward the resulting representation of the webpage 126 to the mobile communications device 130.

In the example of the computer system shown in Figure 1, the test engine 114 is configured to communicate with the representation of the webpage 126 on the mobile communications device 130 via the proxy server 120 to implement the plurality of test interactions and receive data indicative of one or more responses. The test engine 114 is further configured to instruct at least one test interaction with an element of the webpage that is present in the inline frame by way of a first function call on injected computer program code 124 in the document data corresponding to the webpage, wherein the first function call results in a first further function call on injected computer program code in the document data corresponding to the inline frame present in the webpage and wherein the further function call instructs communication with the second domain. In this manner the test engine 114 only has to communicate with a single entity, the presentation of the webpage 126, e.g. which was generated in response to a command from the test engine 114, rather than with multiple component elements of the webpage. This simplifies and accelerates testing. The test engine 114 is also configured to receive an indication of a response from the second web server 150 associated with the second domain following the at least one test interaction by way of a second function call on injected computer program code 114 in the document data corresponding to the webpage, the second function call instructing a second further function call to obtain data representing a state of said element in document data corresponding to the inline frame present in the webpage. For example, the test engine 114 may make a first function call on executable computer program code 124 within the representation of the webpage 126 in order to undertake a series of user interface interactions with elements of the webpage, including elements in nested inline frames. The test engine 114 may then make a second function call on executable computer program code 124 within the representation of the webpage 126 in order to determine a state resulting from the series of user interface interactions, e.g. the called function may return a determination as to whether a required user interface element is now displayed in an inline frame.

An interaction with an element of the webpage may comprise, for example, clicking a button control in the webpage, entering text into a form field on the webpage, or hovering over an image on the webpage. In certain examples, the proxy server 120 is configured to receive a request from the mobile communications device 130 for the webpage. The proxy server 120 may then send requests for the document data corresponding to the webpage to the first web server, and for the document data corresponding to the inline frame to the second web server. The proxy server 120 may then receive the document data corresponding to the webpage from the first web server 140 associated with the first domain and the document data corresponding to the inline frame from the second web server 150 associated with the second domain. The received document data may then be sent by the proxy server 120 as at least part of the representation of the webpage 126 to the mobile communications device 130, the representation of the webpage 126 also comprising injected computer code 114 injected by the code injector 122.

In certain other examples the representation of the webpage 126 further comprises document data corresponding to a further inline frame that is received from a third web server of the plurality of servers associated with a third domain, the further inline frame being present in the inline frame present in the webpage. In such examples, the test engine 114 may be configured to instruct at least one test interaction with an element of the webpage that is present in the further inline frame. The test engine 114 may then receive an indication of a response from the third web server associated with the third domain following the at least one test interaction by way of a third function call resulting from the first and second further function calls, the third function call instructing a third further function call to obtain data representing a state of said element in document data corresponding to the further inline frame present in the webpage. In this manner certain examples described herein provide a mechanism for routing communications between inline frames comprised within a representation of a webpage, e.g. 126 in Figure 1, yet while still being able to record these interactions. Without the examples described herein it would not be possible to access the communications between different domains hosted by web servers providing data for inline frames. The described examples are moreover scalable to complex webpages comprising any number of hierarchically-nested inline frames.

In certain cases, for example when there is a sequence of interactions performed and therefore multiple responses from the web servers 140 and 150, a plurality of representations of the webpage 126, e.g. a set of so-called snapshots of the webpage may be stored in the mobile communications device 130. In such cases, each representation 126 may comprise document data for the webpage and the inline frame. Each snapshot may represent a particular interaction state for the interactive network system comprising at least the first and second server devices 140, 150. Each representation 126 may be stored following a response from one of the first and second web servers, for example may be stored in memory of the mobile communications device, such as random access memory (RAM). The stored representations may be used to determine one or more responses for comparison with the one or more expected responses. For example, stored data representing at least a portion of a particular snapshot of the webpage (e.g. string data representing a particular interaction state) may be compared with stored data representing at least a portion of a previously recorded snapshot of the webpage. In one implementation string data representing a snapshot recorded by a desktop computing device and string data representing a snapshot recorded by the mobile computing device 130 may be compared, e.g. using a string comparison function, to determine differences in response data and hence differences in the interaction. In certain cases only a portion of the snapshot may be compared, e.g. HTTP header data that is known to differ may be ignored. In this case the portion may comprise an identified part of a document object model, which is discussed in more detail below.

In certain cases, the test script 116 may be obtained by recording a particular sequence of interactions and the corresponding responses. In associated examples, the test engine 114 is configured to monitor the sequence of interactions with the webpage on a computer device that is not a mobile communications device over a time period. The computer device that is not a mobile communications device may be, for example, a desktop or laptop computer. In these examples, the test engine 114 records the sequence of interactions as the plurality of defined interactions. The set of responses from the plurality of servers then received by the computer device over the time period is recorded as the one or more expected responses. In other examples, the sequence of interactions subsequently stored as a test script are recorded on a mobile communications device such as a tablet or smartphone device, for example. In one case, it may be desired to confirm that functionality does not differ over a defined time period. For example, this recording may be performed in order to test a variety of different mobile devices, e.g. different makes or models of mobile devices, and/or mobile devices with different screen sizes and processing power.

Alternatively, the sequence of interactions may be predefined and encoded as a standard test script 116. A simple example of a standard set of interactions encoded within a test script 116 may be the user clicking a 'login' button on a webpage and a form appearing with text fields, followed by the user entering text in a 'username' field and a 'password' field, followed by the user clicking 'log on' and being directed to a homepage. For example, certain web development platforms may use a naming standard that enables user interface controls to be identified and a sequence of interactions defined, e.g. in the aforementioned simple case, an expected response may comprise the presence of string data containing the terms "username" and/or "password".

In one example, the computer system 100 and mobile communications device 130 are communicatively coupled via a Universal Serial Bus (USB) connection, or other data cable connection such as FireWire or Thunderbolt™. In other examples, they are communicatively coupled via a wireless communication network such as a wireless local area network (WLAN) and/or cellular data network such as '3G' or '4G'.

In one example, the computer system 100 comprises at least one memory coupled to at least one processor. In this example the interface for loading a test script 112 and/or the test engine 114 comprises computer program code loaded into said at least one memory and implemented using said at least one processor.

The requests and interactions with a webpage referred to and described in the previous examples may comprise sending a HTTP request to one of the first, second, and, in some of the examples third, web servers. Responses from the web servers may comprise HTTP responses.

The document data comprised in the representation of the webpage may comprise at least HyperText Markup Language (HTML) data. In certain cases, the document data may also comprise JavaScript code associated with the webpage, and/or additional programmatic components. The injected computer program code in associated examples may comprise JavaScript code, e.g. in addition to any JavaScript code present in the document data received from a web server. For example, the computer program code may be injected as a <script> element of HTML data comprising JavaScript code.

### Representation of a Webpage and Routing

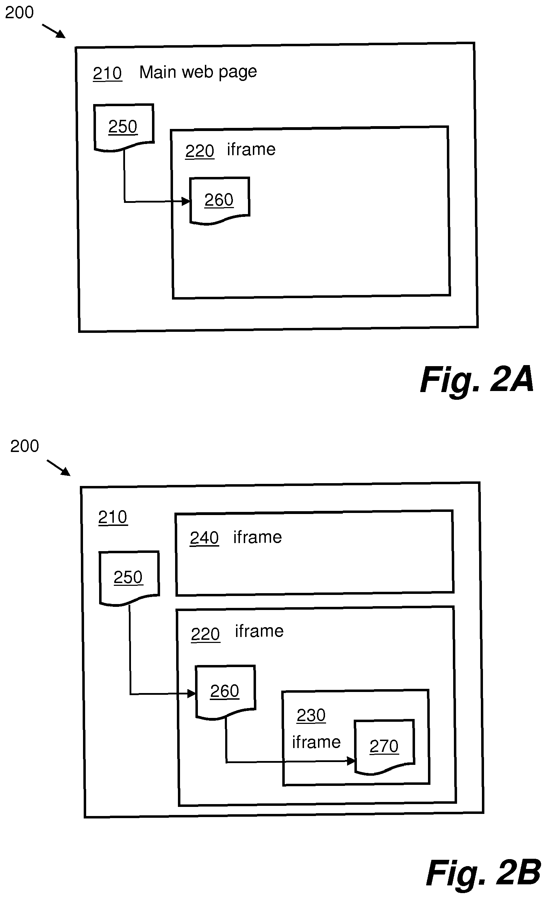

Figure 2a shows a representation 200 of a main webpage 210 with an inline frame e.g. an HTML 'iframe' element 220, present within the main webpage 210. The representation 200, may comprise an implementation of the representation 126 shown in Figure 1. The main webpage 210 and iframe 220 may also comprise respective implementations of the webpage that is received from a first webserver 140, and an inline frame present within the webpage that is received from the second web server 150, described in the previous section with respect to Figure 1. In Figure 2a injected computer program code 250 is present within the main webpage 210 and injected computer program code 260 is present within the iframe 220. The injected computer program code 250 and/or 260 may comprise implementations of the injected computer program code 124 in Figure 1. In this example, the test engine 114 of Figure 1 may only communicate with the computer program code 250, this computer program code then routing an appropriate function call to computer program code 260.

Communication between the injected computer program code 250 and 260 is also shown in Figure 2a. This communication may comprise implementations of the routing of instructions to the target inline frame, as described in the previous section.

Figure 2b shows also shows a representation 200 of a main webpage 210 with an inline frame e.g. an HTML 'iframe' element 220 present within the main webpage 210. In this example, a further inline frame e.g. iframe 230, is present within the iframe 220 present within the main webpage 210. Figure 2b shows injected computer program code 250 present within the main webpage 210 and injected computer program code 260 present within the iframe 220. In the present example, there is also injected computer program code 270 present within the further iframe 230. Figure 2b illustrates communication between the injected computer program code 260 and 270 as well as between injected computer program code 250 and 260. These communications may comprise implementations of routing a request to execute a command on a target component of the further inline frame 230, as described in the previous section. For example, the test engine (114 in Figure 1) of the computer system may be configured to communicate with the representation of the webpage 200 on the mobile communications device via the proxy server 120 to implement the plurality of test interactions and receive data indicative of one or more responses. The test engine 114 may then be configured to instruct at least one test interaction with an element of the webpage that is present in the inline frame by way of a first function call on injected computer program code 250 in the document data corresponding to the webpage. The first function call may result in a first further function call on injected computer program code 260 in the document data corresponding to the inline frame 220 present in the webpage and wherein the further function call instructs communication with the second domain. The test engine 114 may be further configured to receive an indication of a response from the third web server associated with the third domain following the at least one test interaction by way of a third function call resulting from the first and second further function calls, the third function call instructing a third further function call to obtain data representing a state of said element in document data corresponding to the further inline frame present in the webpage.

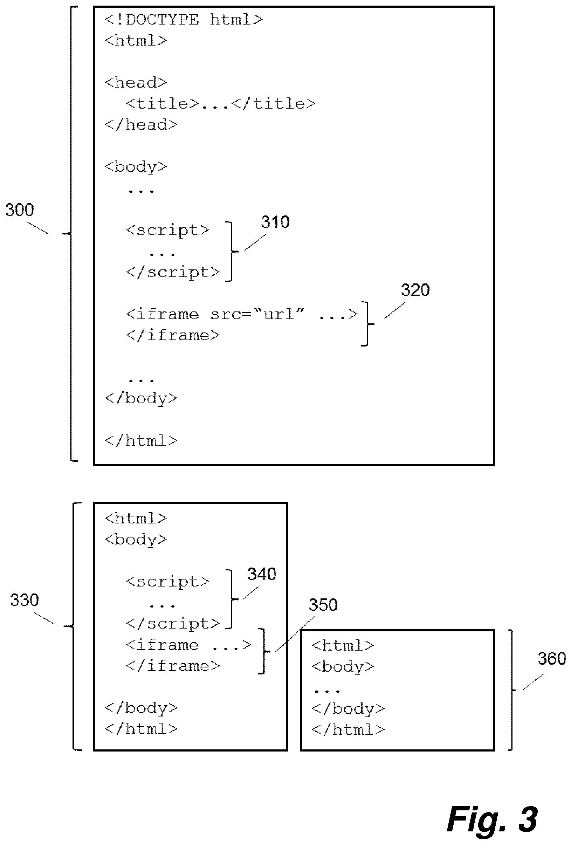

Figure 3 shows document data 300 corresponding to a webpage received from a first web server. The first web server may comprise an implementation of the first web server 140 in Figure 1.

An inline frame element 320 is shown in Figure 3 comprised within the document data 300 corresponding to the webpage received from the first web server. The inline frame comprises attributes including a Uniform Resource Locator (URL) associated with a web page hosted on a second web server. The document data 330 shown in Figure 3 corresponds to the inline frame and is received from the second web server. This inline frame webpage may comprise an implementation of the inline frame 220 shown in Figures 2a and 2b. In some examples, as described previously, a further inline frame may be present within the inline frame present within the webpage that is received from the first web server. Figure 3 shows an inline frame element 350 comprised within the document data 330 that corresponds to inline frame data received from the second web server. The URL attribute of this inline frame may be associated with a webpage hosted on a third web server. The document data 360 corresponds to the inline frame webpage that is received from the third web server. This inline frame webpage may comprise an implementation of the further inline frame 230 in Figure 2b.

Figure 3 shows injected computer program code 310 within the document data 300 received from the first web server. Injected computer program code 340 is also comprised within the document data 330 corresponding to the inline frame received from the second web server. The injected computer program code 310 may comprise an implementation of the injected computer program code 124 of Figure 1. Injected computer program code 310 and 340 may also respectively comprise implementations of the injected computer program code 250 and 260, shown in Figures 2a and 2b. The injected computer code 310 and 340 may implement some of the examples described previously. For instance, the computer program code 310 may be configured to route an instruction of an interaction with an element of the webpage to the target inline frame within which it is comprised. In one example, the document data 360 corresponding to the inline frame that is received from the third web server, also comprises injected computer program code (although this is not shown in the Figure for clarity). Requests and/or commands may therefore be routed via functions defined by the injected code to a target element, as described previously.

In Figure 3, the document data 300, 330, and 360 comprises HTML data. In these examples, the injected computer program code 310 and 340 comprises an HTML 'script' element, wherein string data is enclosed within HTML <script> and </script> tags, as shown in Figure 3. In some examples, injected program code within the <script> tag is associated with the JavaScript programming language. For example, the tag may be written <script type="text/javascript">.

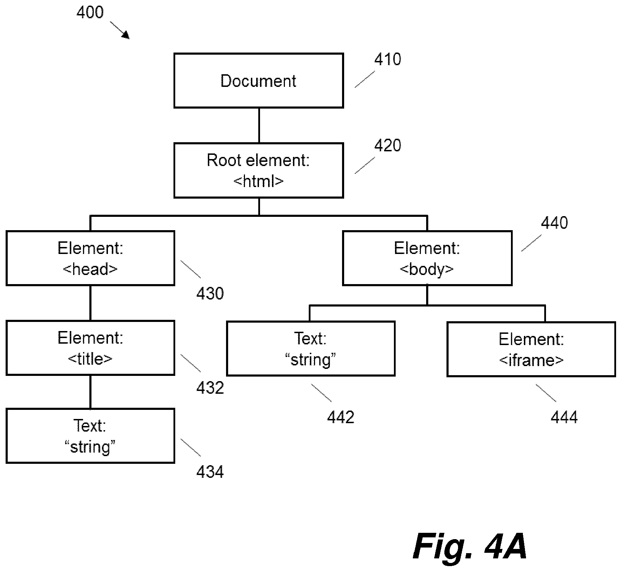

Figure 4a shows a schematic representation of a data structure 400 representing a document object model according to an example. It should be noted that the form of the data structure 400 may vary according to implementation, e.g. based on a used programming technology. The data structure 400 of Figure 4a stores document data 410 corresponding to a webpage hosted on a first web server. This may be the webpage as previously described. Figure 4a shows document data 410 corresponding to the webpage that is accessible on the first web server. This webpage may comprise an implementation of the main webpage 210 in Figures 2a and 2b, or an implementation of the webpage hosted on a first web server described in previous examples. The document data 410 in Figure 4a comprises HTML data 420. The HTML data may comprise numerous components or elements such as a <head> element 430 and <body> element 440 as shown. HTML elements may contain other elements or components. For example, as shown in the figure, the <head> element comprises a <title> element 432 which further comprises a 'Text' component containing string data. The HTML data also comprises a <body> element 440. This <body> element 440 is shown to contain a Text component 442 comprising string data, and an <iframe> element 444. In other examples, the HTML data may comprise more elements and/or components.

The <iframe> element 444 corresponds to an inline frame present within the webpage that is hosted on a different web server to the webpage, i.e. on a second web server. The <iframe> element 444 may comprise a 'src' attribute comprising URL string data corresponding to a location of document data for the inline frame. The inline frame that the <iframe> element 444 corresponds to may comprise an implementation of the inline frame 220 in Figures 2a and 2b, or an implementation of the inline frame hosted on a second web server described in previous examples. The <iframe> element 444 itself may comprise an implementation of the inline frame element 320 in Figure 3.

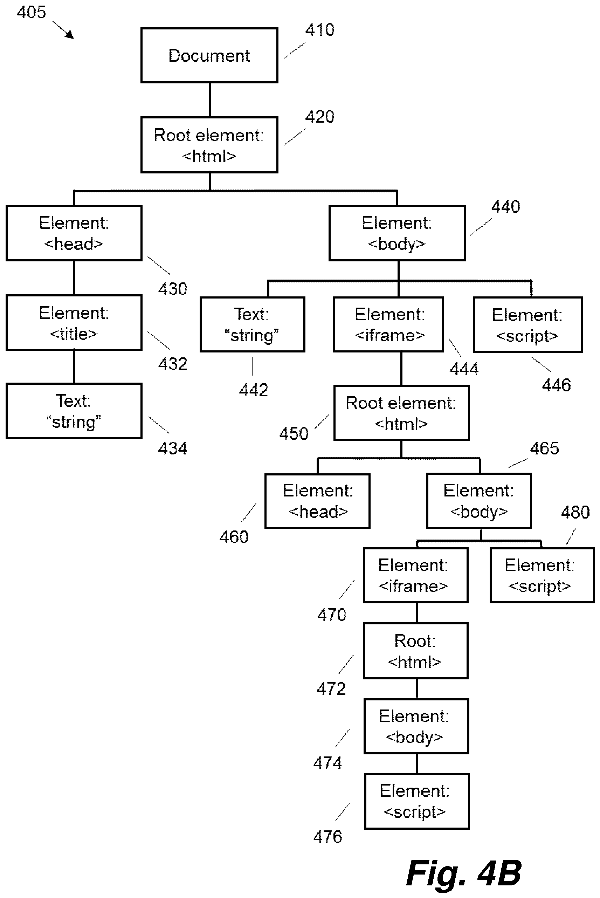

Figure 4b shows a schematic representation of a data structure 405 representing a document object model for the webpage of Figure 4b; in this case the data structure 405 also includes inline frame data that has been received from the second web server and inline frame data that has been received from a further third web server. The data structure 405 may correspond to an implementation of the representation 126 in Figure 1. In general, the features 410 to 444 in Figure 4b correspond to those described previously in relation to Figure 4a. However in Figure 4b, the document data for both inline frames forms part of the data structure 405. This data structure 405 may then be used by the test automation platform 110, via the proxy server 120, to monitor interactions with the webpage instigated from the mobile communications device 130. In Figure 4b HTML document data 450 corresponding to the inline frame 444 present within the webpage comprises a plurality of HTML elements. These include, in this example, <head> and <body> elements, 460 and 465. The <body> element 465 contains in this example an <iframe> element 470 corresponding to an inline frame that is itself nested within the inline frame 444 present within the webpage. This inline frame element 470 may comprise an implementation of the further inline frame 230 in Figure 2b, or an implementation of the inline frame hosted on a third web server as described in previous examples. The HTML document data 472 corresponding to the inline frame element 470 is comprised within the data structure 405, with its comprising elements for example a <body> element 474 in this case, comprised within the document object model structure.

Figure 4b also shows a number of <script> elements: <script> element 446 comprised within the <body> 440 of the document data 410; <script> element 480 comprised within the <body> 465 of the document data 450 corresponding to the inline frame present within the webpage; and <script> element 476 comprised within the <body> 474 of the document data 472 corresponding to the further inline frame present within the inline frame. These script elements comprise computer program code. The computer program code, in some examples, may be JavaScript code. In certain cases, the computer program code may have been injected into the document data. For example, the computer program code comprised within the <script> element 446 may comprise an implementation of the injected computer program code 124 in Figure 1, or 250 in Figures 2a and 2b. The <script> element 446 itself may comprise an implementation of computer program code 310 in Figure 3. Similarly, the computer program code comprised within the <script> element 480 may comprise an implementation of the injected computer program code 260 in Figures 2a and 2b. The <script> element 480 itself may comprise an implementation of computer program code 340 in Figure 3.

In one variation, the document data 405 comprises an Extensible Markup Language (XML) based representation.

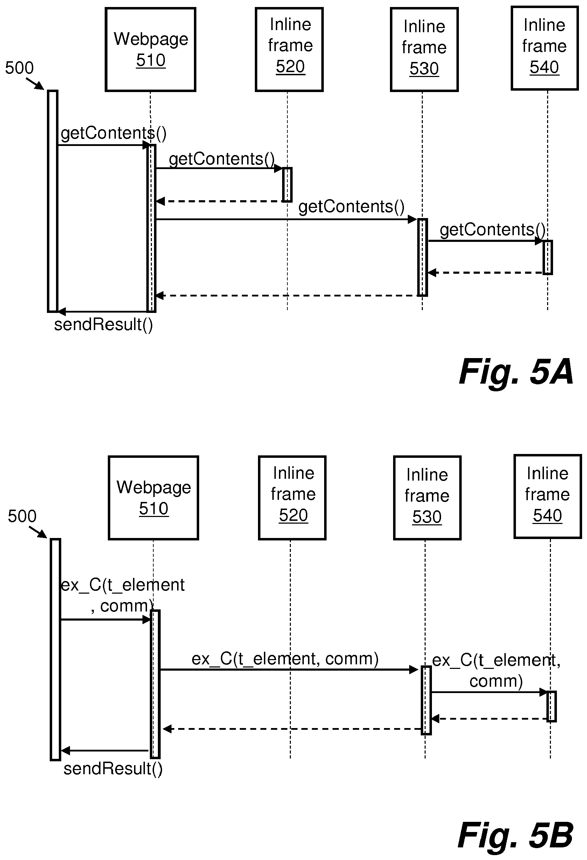

Figures 5a and 5b are sequence diagrams showing schematically a test engine 500 interacting with a webpage 510 comprising a first inline frame 520 and a second inline frame 530. The test engine 500 may send commands to a representation of a webpage on a mobile communications device via the proxy server 120. The first and second inline frames 520 and 530 are so-called 'siblings' and are direct 'child' elements of the webpage 510. The second inline frame 530 comprises a further (nested) inline frame 540. The sequence diagrams show programmatic interactions, wherein a command may result in a request and/or a response to a corresponding web server. The test engine 500 may comprise an implementation of the test engine 114 in Figure 1. The webpage 510 may comprise an implementation of the webpage 210 in Figure 2b, or an implementation of the webpage hosted on a first web server described in previous examples. The inline frame 520 may correspond to the inline frame 240 in Figure 2b. Inline frames 530 and 540 may correspond to inline frames 220 and 230 in Figure 2b, respectively.

In the example shown in Figure 5a, the test engine 500 makes a request for the contents of the webpage, and all inline frames present therein, via a proxy server (e.g. 120 in Figure 1). For example, the test engine 500, through a communication coupling to a mobile communications device provided by a proxy server, may send a command for the mobile communications device to navigate to a particular webpage. A request from the test engine 500 is received by a client device, such as the aforementioned mobile communications device; more particularly, a command may be received by computer program code injected into a representation of a webpage (e.g. 124 in 126 in Figure 1).. In this example the request is a function call on the function "*getContents()*"*.* Computer program code inserted into the webpage 510 receives the function call and in turn routes the function call to computer program code inserted into the inline frames 520 and 530. In Figure 5a, computer program code injected into the document data for the inline frame 520 processes the received function call and responds with document data for the inline frame 520. Computer program code injected into the document data for the inline frame 530 also receives and processes the function call. As part of this processing a further function call is initiated to computer program code injected into the document data for the inline frame 540 comprised within the inline frame 530. This may then result in the computer program code injected into the document data for the inline frame 540 retrieving document data for the inline frame 540. Processing the function call may comprise the client device making an HTTP request to a web server via the proxy server and receiving a response with data. The computer program code injected into the document data for the inline frame 530 receives a response to the function call that contains document data for the inline frame 540. In this example, the computer program code injected into the document data for the inline frame 530 returns both the document data for the inline frame 530 and the received document data for the inline frame 540 to the computer program code injected into the webpage 510. In the present example, the computer program code injected into the webpage 510 sends the compiled contents as a result of the request to the test engine 500 via the proxy server 120 e.g. a function *sendResult()* is called. The test engine 500 therefore receives the entire data structure of the webpage, comprising all document data corresponding to the webpage and inline frames present therein. The entire data structure of the webpage, or so-called "snapshot" of the webpage, may be stored in the test engine 500 or on the mobile communications device 130. In other examples, the data returned by the functions executed in Figure 5A may be stored at the mobile communications device, e.g. as the representation of the webpage 126, wherein the test engine 500 is configured to send commands that initiate functions on this data.

The injected computer program code may be implemented by a web browser running on a processor in a mobile communications device. The mobile communications device may be an implementation of the mobile communications device 130 in Figure 1. As such, in the context of an example of testing interactions with a webpage, the test engine 114, via the proxy server 120 communicatively coupled to the mobile communications device 130, may receive the initial *getContents()* function call, e.g. either from rerouting performed on the client device or by suitably programmed network equipment. As part of implementing the injected computer program code the test engine 114, and or via the mobile communicates device 130, requests to the destination servers for the contents of the respective webpage portions hosted on the web servers. The test engine 114 or mobile communications device 130 may then store the document data corresponding to the webpage and inline frames comprised therein at least as part of a representation of the webpage, e.g. webpage 510 in Figure 5a may have a corresponding data structure 405 as shown in Figure 4b. The mobile communications device 130 running the web browser thus interacts with this representation of the webpage, wherein the test engine 114 controls the test interactions between the mobile communications device 130 and the portions of the webpage. In certain cases, test interactions initiated on the mobile communications device may also be automated using a sequence of user interactions encoded in a test script, e.g. via control of the mobile communications device 130 by the test engine 114 under the control of the test script 116 in Figure 1 and/or by implementing a test script on a systems testing application of the mobile communications device. In one case, the mobile communications device 130 may comprise a plurality of virtual mobile communications devices 130, e.g. which appear to the proxy server 120 as actual mobile communications devices 130. The testing of interactions can therefore comprise making numerous requests from virtual client devices, e.g. under the control of one or more test scripts. Interactions with the webpage 510 may be tested under load conditions, whereby numerous requests and interactions are made simultaneously by virtual users.

In certain other examples, the initial *getContents()* function call may be sent by computer program code injected into the webpage 510 when a snapshot of the webpage is required for the execution of other function commands. For example, if a function command comprised an interaction with an element within a nested inline frame within the webpage e.g. by clicking a button element, the snapshot may be required in order to verify the button element is available to interact with in the webpage. The snapshot may also be required in order to determine routing information to enable the forwarding of the function command from the webpage 510 to the target inline frame, as shown in Figure 5b and described below.

In certain examples, the contents of each inline frame 520, 530, 540 are retrieved by the webpage 510 using the 'postMessage' function mechanism to communicate with computer program code injected within each inline frame.

Figure 5b shows an example interaction with an element of a webpage that includes inline frames. In the example shown in Figure 5b, the test engine 500 submits a request to execute a command on a target element comprised within the inline frame 540. In Figure 5b, a function is called containing the target element as an attribute e.g. *ex_C(t_element,comm)* as shown in Figure 5b, whereby 'ex_C' is the function to execute the command, 't_element' is the target element attribute, and 'comm' is the command itself. These command requests may be implementations of test interactions as described previously in examples. Target elements may be user interface and/or HTML elements, e.g. buttons, form fields, hyperlinks, images etc. The request is received at the computer program code injected into the webpage 510, e.g. on the mobile communications device 130 as received via proxy server 120, and routed to the computer program code injected into the inline frame 540 containing the target element via the computer program code injected into the inline frame 530 that comprises the inline frame 540. The results of the command execution on the target element are routed back from the inline frame 540 to the client device 500 via the inline frame 530 and webpage 510. The interaction shown in Figure 5b may comprise, for example: clicking on a button presented within the inline frame 540; entering text into a form field element located within the inline frame 540; and/or clicking a hyperlink within the inline frame 540. The command may result in a GET, POST and/or PUT HTTP command being sent to a web server associated with the inline frame 540. The result of the interaction may comprise a response to the aforementioned commands from said web server.

### Example method of testing interactions with a webpage comprising inline frames

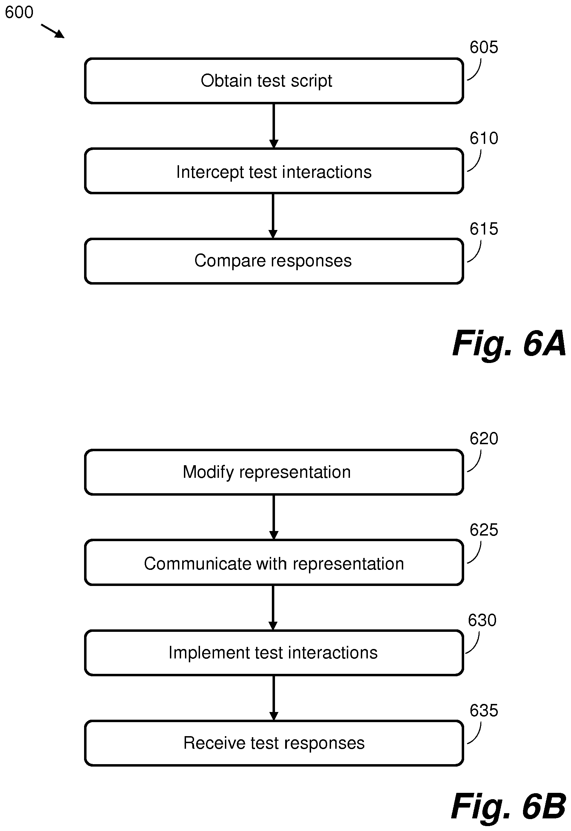

Figure 6a shows a method 600 of testing interactions with a webpage that comprises inline frames according to an example. This method may be performed on the computer system 100 of Figure 1. The method may also be otherwise computer-implemented, for example by one or more computer programs comprising computer program code arranged to, when loaded into system memory and processed by one or more processors, cause said processers to perform the method. In some examples, the computer program is recorded on a computer-readable storage medium. The method may involve sending and/or receiving communications to/from a plurality of networked computer server systems that collectively comprise an interactive network system.

The method begins at step 605 wherein a test script, comprising a plurality of defined interactions with the webpage and one or more expected responses resulting from the defined interactions, is obtained.

Following step 605, step 610 comprises intercepting a plurality of test interactions resulting from an implementation of the test script on a mobile communications device. This may comprise the injection of computer program code to enable the testing of the mobile communications device.

The one or more responses resulting from the plurality of test interactions are then compared in step 615 to the one or more expected responses, in order to indicate whether the plurality of test interactions resulted in the one or more expected responses on the mobile communications device. These indications may then be stored and displayed, for example as an error report showing which interactions resulted in the expected responses, and which did not.

The step 610 of intercepting a plurality of test interactions further comprises, at a proxy server communicatively coupled to the mobile communications device, the method steps shown in Figure 6b. At step 620, a representation of the webpage that is requested by the mobile communications device is modified. The representation of the webpage comprises document data corresponding to the webpage that is received from a first web server, and document data corresponding to an inline frame present in the webpage that is received from a second web server the first web server being associated with a first domain and the second web server being associated with a second domain. For example, this may comprise at least a portion of the data structure 405 shown in Figure 4b.

The representation is modified by injecting computer program code for routing an interaction with a component of the webpage to a target inline frame comprising a target element for interaction, the modified representation being returned to the mobile communications device.

Step 625 comprises communicating, via the proxy server, with the representation of the webpage on the mobile communications device.

Step 630 comprises implementing the plurality of test interactions, comprising instructing at least one test interaction with an element of the webpage that is present in the inline frame by way of a first function call on the injected computer program code in the document data corresponding to the webpage. The first function call results in a first further function call on injected computer program code in the document data corresponding to the inline frame present in the webpage. The further function call instructs communication with the second domain associated with the second web server.

Step 635 comprises receiving an indication of a response from the second web server associated with the second domain following the at least one test interaction by way of a second function call on injected computer program code in the document data corresponding to the webpage The second function call instructs a second further function call to obtain data representing a state of said element in document data corresponding to the inline frame present in the webpage.

In certain examples, the representation of the webpage may comprise a data structure representing a document object model, wherein the document data corresponding to the webpage and the inline frame is stored in the data structure.

In one example, a further inline frame is present in the inline frame that is present in the webpage. The representation of the webpage thus comprises document data corresponding to the further inline frame present in the webpage that is received from a third web server, e.g. this may be data structure 405 in Figure 4b. In this example, the step 610 of intercepting a plurality of test interactions may comprise instructing at least one test interaction with an element of the webpage that is present in the further inline frame. This is followed by receiving an indication of a response from the third web server associated with the third domain following the at least one test interaction by way of a third function call resulting from the first and second further function calls. The third function call instructs a third further function call to obtain data representing a state of said element in document data corresponding to the further inline frame present in the webpage.

In certain examples, a plurality of representations of the webpage are stored, each representation comprising document data for the webpage and the inline frame. These may, for example be a series of "snapshots", e.g. copies of data structure 405 at different points in time. Each representation may be stored following a response from one of the first and second web servers and may be used to determine one or more responses for comparison with the one or more expected responses.

The interactions with a webpage referred to in the method and described examples may comprise sending a Hypertext Transfer Protocol (HTTP) request to one of the first and second web servers. This may be in response to the activation of a user interface component of the webpage, for example the clicking of a particular image on a webpage.

The document data comprised in the representation of the webpage may comprise HyperText Markup Language (HTML) data. The injected computer program code in this method and associated examples may comprise JavaScript code.

In some examples the step 605 of obtaining a test script may comprise monitoring a sequence of interactions with the webpage on a computer device that is not a mobile communications device over a time period, and recording the sequence of interactions as the plurality of defined interactions. A set of responses from the plurality of servers received by the computer device over the time period may be recorded as the one or more expected responses.

In one variation, during the process of recording a sequence of interactions with a webpage, the sequence may be modified by a user, for example by removing, repeating or delaying particular interactions within the sequence. The modifications are made, in one example, during a "pause" period of the recording that is user-applied. In other examples, the sequence is modified after an uninterrupted recording period.

In alternative examples, a test script may be pre-recorded, or may be written in a computer programming language and implemented to control interactions performed by a client device. In some examples, these test scripts are stored locally on the computer implementing the method, whereas in other examples they may be stored externally on a server and downloaded to at least one of the method implementing computer or the test device before testing interactions.

In some arrangements, the expected responses are the set of responses to interactions with a webpage displayed in a web browser application on the computer device that is not a mobile communications device. The computer device that is not a mobile communications device may be, for example, a desktop or laptop computer. In other arrangements, the expected responses are the set of responses to interactions with an application that has web-capabilities installed on a mobile device, or a webpage displayed in a mobile web browser application installed on a mobile device. The mobile device may be, for example, a tablet or mobile communications device such as a smartphone.

In certain examples comparing responses with one or more expected responses comprises verifying an existence of an element within the webpage by comparing a response to a request of whether the element exists within the webpage with a positive response for when the element exists within the webpage.

The representation of the webpage may be stored in memory at the client device, for example in random access memory (RAM) or on a hard disk drive (HDD) or solid state drive (SSD).

The inline frames contained within the webpage may be HTML 'iframe' elements.

### Test Scripts

Figure 7 shows an example of a test script used for testing interactions with a webpage. In certain examples, the test script may be loaded by an interface and implemented by a test engine. The interface and test engine may be implementations of the interface 112 and test engine 114 in Figure 1, respectively. In implementing the test script, the test engine communicates with a representation of a web page on a test device e.g. a mobile communications device. This communication is effected via a proxy server. The proxy server may be an implementation of the proxy server 120 in Figure 1. The test engine implements the test interactions encoded within the test script, and is configured to instruct at least one test interaction with an element of the webpage that is present in an inline frame that is present within the webpage.

The test script 700 shows examples of such test interactions. In the first interaction shown in Figure 7, the test engine instructs navigation to a particular webpage, given by the URL contained within the inverted commas. This command may be sent, from the test engine via the proxy server, to the mobile communications device. In particular, the command may be received by computer program code that has been previously injected into webpage data by the proxy server, the webpage data being stored on the mobile communications device in one implementation. The following interactions are instructions to find the 'email' and 'password' fields contained within the webpage and enter text as string data within those fields. As illustrated the commands only need to be executed with respect to the "webpage" object, e.g. the computer program code 250 in Figures 2A and 2B; this is the case even if the actual webpage elements are located within a plurality of nested inline frames. This is possible via the command routing performed as shown in Figures 2A and 2B, and Figures 5A and 5B. There is also an example in Figure 7 of an instruction to interact with an element i.e. to find and click the 'login' button. The final interaction in the test script 700 is to verify the existence of a 'logout' button in the webpage; denoted as a "logoutButton" element within a data structure representing a document object model (DOM), the data structure comprised with the representation of the webpage. For example, the presence of a 'logout' webpage component may indicate an expected response from the previous series of interactions. It should be noted that the present example is a necessary simplification that has been provided for ease of explanation; actual test scripts may be much more complex and comprise several hundred or thousands of interactions and expected responses, ordered sequentially in time.

In the example of Figure 7, the test engine is configured to receive an indication of a response from the web server associated with a domain that an element interacted with is hosted on, following at least one test interaction. For example, the 'logout' button may be provided as HTML data from a web server following an HTTP request that submits the login details. The "assert" command in Figure 7 returns a positive result if the "logoutButton" element does exist in the webpage representation data, for example. Such indications of a response are effected by injected computer program code, which in certain examples runs in a web browser application stored in memory and processed by a processor on the test device. The injected computer program code is injected during the loading of the webpage, and any inline frames present within the webpage, by a code injector comprised within the proxy server intercepting communications. The execution of the injected computer program code is instigated by the test engine via the proxy server.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer system comprising:
a test automation platform for testing interactions with a webpage comprising inline frames that is accessible on a network, the test automation platform comprising:
an interface for loading a test script, the test script comprising a plurality of defined interactions with the webpage and one or more expected responses resulting from the defined interactions;
a test engine for implementing the test script with regard to a mobile communications device, the test engine being configured to compare one or more responses resulting from a plurality of test interactions involving the mobile communications device to the one or more expected responses in the test script to indicate whether the plurality of defined interactions resulted in the one or more expected responses on the mobile communications device; and
a proxy server for intercepting communications between the mobile communications device and a plurality of servers during the plurality of test interactions, the proxy server comprising a code injector configured to inject computer program code into a representation of the webpage that is requested by the mobile communications device,
the representation of the webpage comprising document data corresponding to the webpage that is received from a first web server of the plurality of servers and document data corresponding to an inline frame present in the webpage that is received from a second web server of the plurality of servers, the first web server being associated with a first domain and the second web server being associated with a second domain,
the representation of the webpage being sent from the proxy server to the mobile communications device;
wherein the test engine is configured to communicate with the representation of the webpage on the mobile communications device via the proxy server to implement the plurality of test interactions and receive data indicative of one or more responses, the test engine being configured to:
instruct at least one test interaction with an element of the webpage that is present in the inline frame by way of a first function call on injected computer program code in the document data corresponding to the webpage, wherein the first function call results in a first further function call on injected computer program code in the document data corresponding to the inline frame present in the webpage and wherein the further function call instructs communication with the second domain; and
receive an indication of a response from the second web server associated with the second domain following the at least one test interaction by way of a second function call on injected computer program code in the document data corresponding to the webpage, the second function call instructing a second further function call to obtain data representing a state of said element in document data corresponding to the inline frame present in the webpage.

2. The computer system of claim 1, wherein the representation of the webpage comprises a data structure representing a document object model and the document data corresponding to the webpage and the inline frame is stored in the data structure.

3. The computer system of claim 1 or claim 2, wherein the proxy server is further configured to:
receive a request from the mobile communications device for the webpage;
send a request for the document data corresponding to the webpage to the first web server;
send a request for the document data corresponding to the inline frame to the second web server;
receive the document data corresponding to the webpage from the first web server associated with the first domain and the document data corresponding to the inline frame from the second web server associated with the second domain; and
send the document data corresponding to the webpage from the first domain and the document data corresponding to the inline frame from the second domain to the mobile communications device as at least part of the representation of the webpage, the representation of the webpage also comprising injected computer code injected by the code injector.

4. The computer system of any one of claims 1 to 3, wherein the representation of the webpage further comprises document data corresponding to a further inline frame that is received from a third web server associated with a third domain of the plurality of servers, the further inline frame being present in the inline frame present in the webpage, and wherein the test engine is further configured to:
instruct at least one test interaction with an element of the webpage that is present in the further inline frame;
receive an indication of a response from the third web server associated with the third domain following the at least one test interaction by way of a third function call resulting from the first and second further function calls, the third function call instructing a third further function call to obtain data representing a state of said element in document data corresponding to the further inline frame present in the webpage.

5. The computer system of any one of claims 1 to 4, wherein the document data comprise HyperText Markup Language (HTML) data, the injected computer program code comprises JavaScript code and an interaction with a webpage comprises sending a Hypertext Transfer Protocol (HTTP) request to one of the first and second web servers in response to activation of a user interface component of the webpage.

6. The computer system of any of claims 1 to 5, wherein the test engine is configured to:
monitor a sequence of interactions with the webpage on a computer device that is not a mobile communications device over a time period; and
record the sequence of interactions as the plurality of defined interactions,
wherein a set of responses from the plurality of servers received by the computer device over the time period is recorded as the one or more expected responses.

7. A computer-implemented method for testing interactions with a webpage comprising inline frames, the method comprising:
obtaining a test script comprising a plurality of defined interactions with the webpage and one or more expected responses resulting from the defined interactions;
intercepting one or more interactions resulting from an implementation of the test script on a mobile communications device; and
comparing one or more responses resulting from the plurality of test interactions to the one or more expected responses to indicate whether the plurality of test interactions resulted in the one or more expected responses on the mobile communications device,
wherein intercepting a plurality of test interactions comprises:
modifying, at a proxy server communicatively coupled to the mobile communications device, a representation of the webpage that is requested by the mobile communications device by injecting computer program code for routing an interaction with a component of the webpage to one of the first and second web servers associated with the first and second domains, the modified representation being returned to the mobile communications device,
the representation of the webpage comprising:
document data corresponding to the webpage that is received from a first web server, and
document data corresponding to an inline frame present in the webpage that is received from a second web server, the first web server being associated with a first domain and the second web server being associated with a second domain; and
communicating, via the proxy server, with the representation of the webpage on the mobile communications device; and
wherein implementing the plurality of test interactions, comprises:
instructing at least one test interaction with an element of the webpage that is present in the inline frame by way of a first function call on the injected computer program code in the document data corresponding to the webpage, wherein the first function call results in a first further function call on injected computer program code in the document data corresponding to the inline frame present in the webpage and wherein the further function call instructs communication with the second domain; and
receiving an indication of a response from the second web server associated with the second domain following the at least one test interaction by way of a second function call on injected computer program code in the document data corresponding to the webpage, the second function call instructing a second further function call to obtain data representing a state of said element in document data corresponding to the inline frame present in the webpage.

8. The method of claim 7, wherein the representation of the webpage comprises a data structure representing a document object model and the document data corresponding to the webpage and the inline frame is stored in the data structure.

9. The method of claim 7 or claim 8, wherein the mobile communications device stores a plurality of representations of the webpage, wherein storing a representation of the webpage comprises:
receiving, at the proxy server, a request from the mobile communications device for the webpage;
sending, from the proxy server:
a request for the document data corresponding to the webpage to the first domain associated with the first web server;
a request for the document data corresponding to the inline frame to the
second domain associated with the web server; and
receiving, at the proxy server, the document data corresponding to the webpage from the first domain and the document data corresponding to the inline frame from the second domain;
sending the document data from the proxy server to the mobile communications device.

10. The method of any one of claims 7 to 9, wherein a further inline frame is present in the inline frame present in the webpage, the representation of the webpage comprises document data corresponding to the further inline frame present in the webpage that is received from a third web server, and wherein intercepting a plurality of test interactions comprises:
instructing at least one test interaction with an element of the webpage that is present in the further inline frame;
receiving an indication of a response from the third web server associated with the third domain following the at least one test interaction by way of a third function call resulting from the first and second further function calls, the third function call instructing a third further function call to obtain data representing a state of said element in document data corresponding to the further inline frame present in the webpage.

11. The method of any one of claims 7 to 10, comprising:
storing a plurality of representations of the webpage, each representation comprising document data for the webpage and the inline frame, each representation being stored following a response from one of the first and second web servers and being used to determine one or more responses for comparison with the one or more expected responses.

12. The method of any one of claims 7 to 11, wherein: the document data comprises at least HyperText Markup Language data; the injected computer program code comprises JavaScript code; and an interaction with a webpage comprises sending a Hypertext Transfer Protocol (HTTP) request to one of the first and second web servers in response to activation of a user interface component of the webpage.

13. The method of any one of claims 7 to 12, wherein obtaining a test script comprises:
monitoring a sequence of interactions with the webpage on a computer device that is not a mobile communications device over a time period; and
recording the sequence of interactions as the plurality of defined interactions,
wherein a set of responses from the plurality of servers received by the computer device over the time period is recorded as the one or more expected responses.

14. A computer program comprising computer program code arranged to, when loaded into system memory and processed by one or more processors, cause said processors to perform the computer-implemented methods of any one of claims 7 to 13.

15. A computer-readable storage medium having recorded thereon the computer program of claim 14.

## Patentansprüche

1. Computersystem, umfassend:
eine Testautomatisierungsplattform zum Testen von Interaktionen mit einer Webseite, die Inline-Frames umfasst und auf die in einem Netzwerk zugreifbar ist, wobei die Testautomatisierungsplattform umfasst:
eine Schnittstelle zum Laden eines Testskripts, wobei das Testskript mehrere definierte Interaktionen mit der Webseite und ein oder mehrere erwartete Antworten, die aus den definierten Interaktionen resultieren, umfasst;
eine Testeinheit für die Implementierung des Testskripts in Bezug auf ein Mobilkommunikationsgerät, wobei die Testeinheit eingerichtet ist, um eine oder mehrere Antworten, die aus den mehreren Testinteraktionen resultieren, an denen das Mobilkommunikationsgerät beteiligt ist, mit der einen oder den mehreren erwarteten Antworten im Testskript zu vergleichen, um anzugeben, ob die mehreren definierten Interaktionen zu der einen oder den mehreren erwarteten Antworten auf dem Mobilkommunikationsgerät geführt haben; und
einen Proxy-Server zum Erfassen von Kommunikationen zwischen dem Mobilkommunikationsgerät und mehreren Servern während der mehreren Testinteraktionen, wobei der Proxy-Server einen Code-Injektor umfasst, der eingerichtet ist, um Computerprogrammcode in eine Darstellung der Webseite, die von dem Mobilkommunikationsgerät angefordert wird, einzufügen,
die Darstellung der Webseite Dokumentdaten, die der Webseite entsprechen, die von einem ersten Webserver der mehreren Server empfangen werden, und Dokumentdaten umfasst, die einem Inline-Frame entsprechen, der auf der Webseite vorhanden ist, die von einem zweiten Webserver der mehreren Server empfangen werden, wobei der erste Webserver mit einer ersten Domäne und der zweite Webserver mit einer zweiten Domäne assoziiert ist,
die Darstellung der Webseite von dem Proxy-Server an das Mobilkommunikationsgerät gesendet wird;
wobei die Testeinheit eingerichtet ist, um mit der Darstellung der Webseite auf dem Mobilkommunikationsgerät über den Proxy-Server zu kommunizieren, um die mehreren Testinteraktionen zu implementieren und um Daten, die ein oder mehrere Antworten angeben zu empfangen, wobei die Testeinheit eingerichtet ist zum:
Veranlassen mindestens einer Testinteraktion mit einem Element der Webseite, das im Inline-Frame vorhanden ist, durch einen ersten Funktionsaufruf von eingefügtem Computerprogrammcode in die Dokumentdaten, die der Webseite entsprechen, wobei aus dem ersten Funktionsaufruf ein erster weiterer Funktionsaufruf von eingefügtem Computerprogrammcode in die Dokumentdaten, die dem Inline-Frame entsprechen, der in der Webseite vorhanden ist, resultiert und wobei der weitere Funktionsaufruf eine Kommunikation mit der zweiten Domäne veranlasst; und
Empfangen einer Angabe über eine Antwort des zweiten Webservers, der mit der zweiten Domäne assoziiert ist, nach der mindestens einen Testinteraktion durch einen zweiten Funktionsaufruf von eingefügtem Computerprogrammcode in die Dokumentdaten, die der Webseite entsprechen, wobei der zweite Funktionsaufruf einen zweiten weiteren Funktionsaufruf veranlasst, um Daten zu erhalten, die einen Zustand des Elements in den Dokumentdaten repräsentieren, die dem Inline-Frame, der in der Webseite vorhanden ist, entsprechen.

2. Computersystem nach Anspruch 1, wobei die Darstellung der Webseite eine Datenstruktur aufweist, die ein Dokumentobjektmodel darstellt, und die Dokumentdaten, die der Webseite und dem Inline-Frame entsprechen, in der Datenstruktur gespeichert sind.

3. Computersystem nach Anspruch 1 oder 2, wobei der Proxy-Server ferner eingerichtet ist zum:
Empfangen einer Anfrage vom Mobilkommunikationsgerät für die Webseite;
Senden einer Anfrage für die Dokumentdaten, die der Webseite entsprechen, an den ersten Webserver;
Senden einer Anfrage für die Dokumentdaten, die dem Inline-Frame entsprechen an den zweiten Webserver;
Empfangen der Dokumentdaten, die der Webseite entsprechen, vom ersten Webserver, der mit einer ersten Domäne assoziiert ist, und der Dokumentdaten, die dem Inline-Frame entsprechen, vom zweiten Webserver, der mit der zweiten Domäne assoziiert ist; und
Senden der Dokumentdaten, die der Webseite entsprechen, von der ersten Domäne und der Dokumentdaten, die dem Inline-Frame entsprechen, von der zweiten Domäne an das Mobilkommunikationsgerät als zumindest Teil der Darstellung der Webseite, wobei die Darstellung der Webseite auch eingefügten Computercode, der durch den Code-Injektor eingefügt wurde, umfasst.

4. Computersystem nach einem der Ansprüche 1 bis 3, wobei die Darstellung der Webseite ferner Dokumentdaten umfasst, die einem weiteren Inline-Frame entsprechen, der von einem dritten Webserver der mehreren Server empfangen wird, der mit einer dritten Domäne assoziiert ist, wobei der weitere Inline-Frame in dem Inline-Frame vorhanden ist, der in der Webseite vorhanden ist, und wobei die Testeinheit ferner eingerichtet ist zum:
Veranlassen mindestens einer Testinteraktion mit einem Element der Webseite, das im weiteren Inline-Frame vorhanden ist;
Empfangen einer Angabe über eine Antwort vom dritten Webserver, der mit der dritten Domäne assoziiert ist, nach der mindestens einen Testinteraktion durch einen dritten Funktionsaufruf, der aus dem ersten und zweiten weiteren Funktionsaufruf resultiert, wobei der dritte Funktionsaufruf einen dritten weiteren Funktionsaufruf veranlasst, um Daten zu erhalten, die einen Zustand des Elements in den Dokumentdaten repräsentieren, die dem weiteren Inline-Frame, der in der Webseite vorhanden ist, entsprechen.

5. Computersystem nach einem der Ansprüche 1 bis 4, wobei die Dokumentdaten HyperText Markup Language (HTML) Daten umfassen, der eingefügte Computerprogrammcode JavaScript Code umfasst und eine Interaktion mit der Webseite das Senden einer Hypertext Transfer Protokoll (HTTP) Anfrage an einen von dem ersten und zweiten Webserver als Antwort auf die Aktivierung einer Benutzerschnittstellenkomponente der Webseite umfasst.

6. Computersystem nach einem der Ansprüche 1 bis 5, wobei die Testeinheit eingerichtet ist zum:
Überwachen einer Sequenz von Interaktionen mit der Webseite einer Computervorrichtung, die nicht ein Mobilkommunikationsgerät ist, über eine Zeitperiode; und
Aufzeichnen der Sequenz von Interaktionen als die mehreren definierten Interaktionen,
wobei ein Satz von Antworten von den mehreren Servern, die durch die Computervorrichtung über die Zeitperiode empfangen werden, als die eine oder mehreren erwarteten Antworten aufgezeichnet wird.

7. Computerimplementiertes Verfahren zum Testen von Interaktionen mit einer Webseite, die Inline-Frames umfasst, wobei das Verfahren umfasst:
Erhalten eines Testskripts umfassend mehrere definierte Interaktionen mit der Webseite und ein oder mehrere erwartete Antworten die aus den mehreren definierten Interaktionen resultieren;
Erfassen einer oder mehrerer Interaktionen, die aus einer Implementierung des Testskripts auf einem Mobilkommunikationsgerät resultieren, und
Vergleichen einer oder mehrerer Antworten, die aus den mehreren Testinteraktionen resultieren, mit der einen oder den mehreren erwarteten Antworten, um anzugeben, ob die mehreren Testinteraktionen zu der einen oder den mehreren erwarteten Antworten auf dem Mobilkommunikationsgerät geführt haben,
wobei das Erfassen mehrerer Testinterkationen umfasst:
Modifizieren einer Darstellung der Webseite, die durch das Mobilkommunikationsgerät angefragt wurde, durch Einfügen von Computerprogrammcode für das Weiterleiten einer Interaktion mit einer Komponente der Webseite an einen von dem ersten und zweiten Webserver, die mit der ersten und zweiten Domäne assoziiert sind durch einen Proxy-Server, der kommunikativ mit dem Mobilkommunikationsgerät gekoppelt ist, wobei die modifizierte Darstellung an das Mobilkommunikationsgerät zurückgegeben wird,
die Darstellung der Webseite umfasst:
Dokumentdaten, die der Webseite entsprechen, die vom ersten Webserver empfangen wurden, und
Dokumentdaten, die einem Inline-Frame entsprechen, der in der Webseite vorhanden ist, die von einem zweiten Webserver empfangen wurden, wobei der erste Webserver mit einer ersten Domäne und der zweite Webserver mit einer zweiten Domäne assoziiert ist; und
Kommunizieren über einen Proxy-Server mit der Darstellung der Webseite auf einem Mobilkommunikationsgerät; und
wobei das Implementieren der mehreren Testinteraktionen umfasst:
Veranlassen mindestens einer Testinteraktion mit einem Element der Webseite, das im Inline-Frame vorhanden ist, durch einen ersten Funktionsaufruf von eingefügtem Computerprogrammcode in die Dokumentdaten, die der Webseite entsprechen, wobei aus dem ersten Funktionsaufruf ein erster weiterer Funktionsaufruf von eingefügtem Computerprogrammcode in die Dokumentdaten, die dem Inline-Frame entsprechen, der in der Webseite vorhanden ist, resultiert und wobei der weitere Funktionsaufruf eine Kommunikation mit der zweiten Domäne veranlasst; und
Empfangen einer Angabe über eine Antwort des zweiten Webservers, der mit der zweiten Domäne assoziiert ist, nach der mindestens einen Testinteraktion durch einen zweiten Funktionsaufruf von eingefügtem Computerprogrammcode in die Dokumentdaten, die der Webseite entsprechen, wobei der zweite Funktionsaufruf einen zweiten weiteren Funktionsaufruf veranlasst, um Daten zu erhalten, die einen Zustand des Elements in den Dokumentdaten repräsentieren, die dem Inline-Frame, der in der Webseite vorhanden ist, entsprechen.

8. Verfahren nach Anspruch 7, wobei die Darstellung der Webseite eine Datenstruktur aufweist, die ein Dokumentobjektmodel darstellt, und die Dokumentdaten, die der Webseite und dem Inline-Frame entsprechen, in der Datenstruktur gespeichert sind.

9. Verfahren nach Anspruch 7 oder 8, wobei das Mobilkommunikationsgerät mehrere Darstellung der Webseite speichert, wobei das Speichern der Darstellungen der Webseite umfasst:
Empfangen einer Anfrage von dem Mobilkommunikationsgerät für die Webseite durch den Proxy-Server;
Senden durch den Proxy-Server:
einer Anfrage für Dokumentdaten, die der Webseite entsprechen, an eine erste Domäne, die mit dem ersten Webserver assoziiert ist;
einer Anfrage für die Dokumentdaten, die dem Inline-Frame entsprechen, an die zweite Domäne, die mit dem Webserver assoziiert ist; und
Empfangen der Dokumentdaten, die der Webseite entsprechen, von der ersten Domäne und der Dokumentdaten, die dem Inline-Frame entsprechen, von der zweiten Domäne durch den Proxy-Server;
Senden der Dokumentdaten vom Proxy-Server an das Mobilkommunikationsgerät.

10. Verfahren nach einem der Ansprüche 7 bis 9, wobei ein weiterer Inline-Frame im Inline-Frame vorhanden ist, der in der Webseite vorhanden ist, wobei die Darstellung der Webseite Dokumentdaten umfasst, die dem weiteren Inline-Frame entsprechen, der in der Webseite vorhanden ist, die von einem dritten Webserver empfangen werden, und wobei das Erfassen der mehreren Testinteraktionen umfasst:
Veranlassen mindestens einer Testinteraktion mit einem Element der Webseite, das im weiteren Inline-Frame vorhanden ist;
Empfangen einer Angabe über eine Antwort vom dritten Webserver, der mit der dritten Domäne assoziiert ist, nach der mindestens einen Testinteraktion durch einen dritten Funktionsaufruf, der aus dem ersten und zweiten weiteren Funktionsaufruf resultiert, wobei der dritte Funktionsaufruf einen dritten weiteren Funktionsaufruf veranlasst, um Daten zu erhalten, die einen Zustand des Elements in den Dokumentdaten repräsentieren, die dem weiteren Inline-Frame, der in der Webseite vorhanden ist, entsprechen.

11. Verfahren nach einem der Ansprüche 7 bis 10, umfassend:
Speichern mehrerer Darstellungen der Webseite, wobei jede Darstellung Dokumentdaten für die Webseite und den Inline-Frame umfasst, wobei jede Darstellung nach dem Empfangen einer Antwort von einem von dem ersten und zweiten Webserver gespeichert und verwendet wird, um eine oder mehrere Antworten für den Vergleich mit der einen oder den mehreren erwarteten Antwort zu bestimmen.

12. Verfahren nach einem der Ansprüche 7 bis 11, wobei die Dokumentdaten zumindest HyperText Markup Language Daten enthalten; der eingefügte Computerprogrammcode JavaScript Code umfasst; und eine Interaktion mit der Webseite das Senden einer HyperText Transfer Protokoll (HTTP) Anfrage an einen von dem ersten und zweiten Webserver als Antwort auf eine Aktivierung einer Benutzerschnittstellenkomponente der Webseite umfasst.

13. Verfahren nach einem der Ansprüche 7 bis 12, wobei das Erhalten eines Testskripts umfasst:
Überwachen einer Sequenz von Interaktionen mit der Webseite einer Computervorrichtung, die nicht ein Mobilkommunikationsgerät ist, über eine Zeitperiode; und
Aufzeichnen der Sequenz von Interaktionen als die mehreren definierten Interaktionen,
wobei ein Satz von Antworten von den mehreren Servern, die durch die Computervorrichtung über die Zeitperiode empfangen werden, als die eine oder mehreren erwarteten Antworten aufgezeichnet wird.

14. Computerprogramm umfassend einen Computerprogrammcode, der, wenn er in einen Systemspeicher geladen und durch einen oder mehrere Prozessoren ausgeführt wird, den Prozessor veranlasst, das computerimplementierte Verfahren nach einem der Ansprüche 7 bis 13 auszuführen.

15. Computerlesbares Speichermedium auf dem das Computerprogramm nach Anspruch 14 gespeichert ist.

## Revendications

1. Système informatique comprenant :
une plate-forme d'automatisation de test pour tester des interactions avec une page Web comprenant des trames en ligne qui est accessible sur un réseau, la plate-forme d'automatisation de test comprenant :
une interface pour charger un script de test, le script de test comprenant une pluralité d'interactions définies avec la page Web et une ou plusieurs réponses attendues résultant des interactions définies ;
un moteur de test pour mettre en oeuvre le script de test par rapport à un dispositif de communications mobile, le moteur de test étant configuré pour comparer une ou plusieurs réponses résultant d'une pluralité d'interactions de test impliquant le dispositif de communications mobile aux une ou plusieurs réponses attendues dans le script de test pour indiquer si la pluralité d'interactions définies a entraîné les une ou plusieurs réponses attendues sur le dispositif de communications mobile ; et
un serveur mandataire pour intercepter des communications entre le dispositif de communications mobile et une pluralité de serveurs durant la pluralité d'interactions de test, le serveur mandataire comprenant un injecteur de code configuré pour injecter un code de programme informatique dans une représentation de la page Web qui est demandée par le dispositif de communications mobile,
la représentation de la page Web comprenant des données de document correspondant à la page Web qui est reçue en provenance d'un premier serveur Web de la pluralité de serveurs et des données de document correspondant à une trame en ligne présente dans la page Web qui est reçue en provenance d'un deuxième serveur Web de la pluralité de serveurs, le premier serveur Web étant associé à un premier domaine et le deuxième serveur Web étant associé à un deuxième domaine,
la représentation de la page Web étant envoyée du serveur mandataire au dispositif de communications mobile ;
dans lequel le moteur de test est configuré pour communiquer avec la représentation de la page Web sur le dispositif de communications mobile via le serveur mandataire pour mettre en oeuvre la pluralité d'interactions de test et recevoir des données indicatives d'une ou plusieurs réponses, le moteur de test étant configuré pour :
instruire au moins une interaction de test avec un élément de la page Web qui est présent dans la trame en ligne au moyen d'un premier appel de fonction sur un code de programme informatique injecté dans les données de document correspondant à la page Web, où le premier appel de fonction entraîne un premier appel de fonction supplémentaire sur un code de programme informatique injecté dans les données de document correspondant à la trame en ligne présente dans la page Web et où l'appel de fonction supplémentaire instruit une communication avec le deuxième domaine ; et
recevoir une indication d'une réponse en provenance du deuxième serveur Web associé au deuxième domaine suite à l'au moins une interaction de test au moyen d'un deuxième appel de fonction sur un code de programme informatique injecté dans les données de document correspondant à la page Web, le deuxième appel de fonction instruisant un deuxième appel de fonction supplémentaire pour obtenir des données représentant un état dudit élément dans des données de document correspondant à la trame en ligne présente dans la page Web.

2. Système informatique selon la revendication 1, dans lequel la représentation de la page Web comprend une structure de données représentant un modèle objet de document et les données de document correspondant à la page Web et à la trame en ligne sont stockées dans la structure de données.

3. Système informatique selon la revendication 1 ou la revendication 2, dans lequel le serveur mandataire est en outre configuré pour :
recevoir une requête en provenance du dispositif de communications mobile pour la page Web ;
envoyer une requête pour les données de document correspondant à la page Web au premier serveur Web ;
envoyer une requête pour les données de document correspondant à la trame en ligne au deuxième serveur Web ;
recevoir les données de document correspondant à la page Web en provenance du premier serveur Web associé au premier domaine et les données de document correspondant à la trame en ligne en provenance du deuxième serveur Web associé au deuxième domaine ; et
envoyer les données de document correspondant à la page Web du premier domaine et les données de document correspondant à la trame en ligne du deuxième domaine au dispositif de communications mobile comme au moins une partie de la représentation de la page Web, la représentation de la page Web comprenant également un code informatique injecté injecté par l'injecteur de code.

4. Système informatique selon l'une quelconque des revendications 1 à 3, dans lequel la représentation de la page Web comprend en outre des données de document correspondant à une trame en ligne supplémentaire qui est reçue en provenance d'un troisième serveur Web associé à un troisième domaine de la pluralité de serveurs, la trame en ligne supplémentaire étant présente dans la trame en ligne présente dans la page Web, et dans lequel le moteur de test est en outre configuré pour :
instruire au moins une interaction de test avec un élément de la page Web qui est présent dans la trame en ligne supplémentaire ;
recevoir une indication d'une réponse en provenance du troisième serveur Web associé au troisième domaine suite à l'au moins une interaction de test au moyen d'un troisième appel de fonction résultant des premier et deuxième appels de fonction supplémentaires, le troisième appel de fonction instruisant un troisième appel de fonction supplémentaire pour obtenir des données représentant un état dudit élément dans des données de document correspondant à la trame en ligne supplémentaire présente dans la page Web.

5. Système informatique selon l'une quelconque des revendications 1 à 4, dans lequel les données de document comprennent des données de langage de balisage hypertexte (HTML), le code de programme informatique injecté comprend un code JavaScript et une interaction avec une page Web comprend l'envoi d'une requête de protocole de transfert hypertexte (HTTP) à un des premier et deuxième serveurs Web en réponse à l'activation d'un composant d'interface utilisateur de la page Web.

6. Système informatique selon l'une quelconque des revendications 1 à 5, dans lequel le moteur de test est configuré pour :
surveiller une séquence d'interactions avec la page Web sur un dispositif informatique qui n'est pas un dispositif de communications mobile pendant une période de temps ; et
enregistrer la séquence d'interactions en tant que la pluralité d'interactions définies,
dans lequel un ensemble de réponses en provenance de la pluralité de serveurs reçu par le dispositif informatique pendant la période de temps est enregistré en tant que les une ou plusieurs réponses attendues.

7. Procédé mis en oeuvre par ordinateur pour tester des interactions avec une page Web comprenant des trames en ligne, le procédé comprenant :
l'obtention d'un script de test comprenant une pluralité d'interactions définies avec la page Web et une ou plusieurs réponses attendues résultant des interactions définies ;
l'interception d'une ou plusieurs interactions résultant d'une mise en oeuvre du script de test sur un dispositif de communications mobile ; et
la comparaison d'une ou plusieurs réponses résultant de la pluralité d'interactions de test aux une ou plusieurs réponses attendues pour indiquer si la pluralité d'interactions de test a entraîné les une ou plusieurs réponses attendues sur le dispositif de communications mobile,
dans lequel l'interception d'une pluralité d'interactions de test comprend :
la modification, au niveau d'un serveur mandataire couplé communicativement au dispositif de communications mobile, d'une représentation de la page Web qui est demandée par le dispositif de communications mobile en injectant un code de programme informatique pour router une interaction avec un composant de la page Web vers un des première et deuxième serveurs Web associés aux premier et deuxième domaines, la représentation modifiée étant retournée au dispositif de communications mobile,
la représentation de la page Web comprenant :
des données de document correspondant à la page Web qui est reçue en provenance d'un premier serveur Web, et
des données de document correspondant à une trame en ligne présente dans la page Web qui est reçue en provenance d'un deuxième serveur Web, le premier serveur Web étant associé à un premier domaine et le deuxième serveur Web étant associé à un deuxième domaine ; et
la communication, via le serveur mandataire, avec la représentation de la page Web sur le dispositif de communications mobile ; et
dans lequel la mise en oeuvre de la pluralité d'interactions de test comprend :
l'instruction d'au moins une interaction de test avec un élément de la page Web qui est présent dans la trame en ligne au moyen d'un premier appel de fonction sur le code de programme informatique injecté dans les donnée de document correspondant à la page Web, où le premier appel de fonction entraîne un premier appel de fonction supplémentaire sur un code de programme informatique injecté dans les données de document correspondant à la trame en ligne présente dans la page Web et où l'appel de fonction supplémentaire instruit une communication avec le deuxième domaine ; et
la réception d'une indication d'une réponse en provenance du deuxième serveur Web associé au deuxième domaine suite à l'au moins une interaction de test au moyen d'un deuxième appel de fonction sur un code de programme informatique injecté dans les données de document correspondant à la page Web, le deuxième appel de fonction instruisant un deuxième appel de fonction supplémentaire pour obtenir des données représentant un état dudit élément dans des données de document correspondant à la trame en ligne présente dans la page Web.

8. Procédé selon la revendication 7, dans lequel la représentation de la page Web comprend une structure de données représentant un modèle objet de document et les données de document correspondant à la page Web et à la trame en ligne sont stockées dans la structure de données.

9. Procédé selon la revendication 7 ou la revendication 8, dans lequel le dispositif de communications mobile stocke une pluralité de représentations de la page Web, dans lequel le stockage d'une représentation de la page Web comprend :
la réception, au niveau du serveur mandataire, d'une requête en provenance du dispositif de communications mobile pour la page Web ;
l'envoi, à partir du serveur mandataire :
d'une requête pour les données de document correspondant à la page Web au premier domaine associé au premier serveur Web ;
d'une requête pour les données de document correspondant à la trame en ligne au deuxième domaine associé au serveur Web ; et
la réception, au niveau du serveur mandataire, des données de document correspondant à la page Web en provenance du premier domaine et des données de document correspondant à la trame en ligne en provenance du deuxième domaine ;
l'envoi des données de document du serveur mandataire au dispositif de communications mobile.

10. Procédé selon l'une quelconque des revendications 7 à 9, dans lequel une trame en ligne supplémentaire est présente dans la trame en ligne présente dans la page Web, la représentation de la page Web comprend des données de document correspondant à la trame en ligne supplémentaire présente dans la page Web qui est reçue en provenance d'un troisième serveur Web, et dans lequel l'interception d'une pluralité d'interactions de test comprend :
l'instruction d'au moins une interaction de test avec un élément de la page Web qui est présent dans la trame en ligne supplémentaire ;
la réception d'une indication d'une réponse en provenance du troisième serveur Web associé au troisième domaine suite à l'au moins une interaction de test au moyen d'un troisième appel de fonction résultant des premier et deuxième appels de fonction supplémentaires, le troisième appel de fonction instruisant un troisième appel de fonction supplémentaire pour obtenir des données représentant un état dudit élément dans des données de document correspondant à la trame en ligne supplémentaire présente dans la page Web.

11. Procédé selon l'une quelconque des revendications 7 à 10, comprenant :
le stockage d'une pluralité de représentations de la page Web, chaque représentation comprenant des données de document pour la page Web et la trame en ligne, chaque représentation étant stockée suite à une réponse en provenance d'un des premier et deuxième serveurs Web et étant utilisée pour déterminer une ou plusieurs réponses pour la comparaison avec les une ou plusieurs réponses attendues.

12. Procédé selon l'une quelconque des revendications 7 à 11, dans lequel :
les données de document comprennent au moins des données de langage de balisage hypertexte ; le code du programme informatique injecté comprend un code JavaScript ; et une interaction avec une page Web comprend l'envoi d'une requête de protocole de transfert hypertexte (HTTP) à un des premier et deuxième serveurs Web en réponse à l'activation d'un composant d'interface utilisateur de la page Web.

13. Procédé selon l'une quelconque des revendications 7 à 12, dans lequel l'obtention d'un script de test comprend :
la surveillance d'une séquence d'interactions avec la page Web sur un dispositif informatique qui n'est pas un dispositif de communications mobile pendant une période de temps ; et
l'enregistrement de la séquence d'interactions en tant que la pluralité d'interactions définies,
dans lequel un ensemble de réponses en provenance de la pluralité de serveurs reçu par le dispositif informatique pendant la période de temps est enregistré en tant que les une ou plusieurs réponses attendues.

14. Programme informatique comprenant un code de programme informatique conçu pour, lorsqu'il est chargé dans la mémoire système et traité par un ou plusieurs processeurs, amener lesdits processeurs à effectuer les procédés mis en oeuvre par ordinateur selon l'une quelconque des revendications 7 à 13.

15. Support de stockage lisible par ordinateur sur lequel est enregistré le programme informatique selon la revendication 14.
